# EUROPEAN PATENT SPECIFICATION

(11) **EP 2 279 218 B1**
(45) Date of publication and mention of the grant of the patent: **15.03.2017**
(21) Application number: 09751178.6
(22) Date of filing: 12.05.2009
(51) Int. Cl.: C08G 18/42, C08G 18/66

(54) **THERMOPLASTIC POLYURETHANES WITH GOOD FUEL RESISTANCE**
THERMOPLASTISCHE POLYURETHANE MIT GUTER KRAFTSTOFFBESTÄNDIGKEIT
POLYURÉTHANNES THERMOPLASTIQUES AYANT UNE BONNE RÉSISTANCE AUX CARBURANTS

(30) Priority: 19.05.2008 US 54176 P
(43) Date of publication of application: 02.02.2011
(73) Proprietor: Lubrizol Advanced Materials, Inc., Cleveland, OH 44141-3247 (US)
(72) Inventor: FARKAS, Julius, North Ridgeville OH 44039 (US); HEWITT, Larry, E., Vermillion OH 44089 (US); JACOBS, Charles, P., Elyria OH 44035 (US); SIDDHAMALLI, Sridhar, K., Lutz FL 33558 (US); VONTORCIK, Joseph, J., Jr., Broadview Heights OH 44147 (US)
(74) Representative: dompatent von Kreisler Selting Werner - Partnerschaft von Patent- und Rechtsanwälten mbB
(86) International application number: PCT/US2009/043529
(87) International publication number: WO 2009/142949

(56) References cited:
- US-A- 3 741 918
- US-A- 5 047 495

## Description

### BACKGROUND OF THE INVENTION

The present invention is directed to the use of polyurethane compositions which are synthesized from poly(diethylene adipate) glycol and exhibit excellent resistance toward fuels, especially alcohol-containing fuels.

Flexible fuel tanks utilized for the storage of fuels, such as gasoline or jet fuel require extended fuel resistance and hydrolytic stability along with toughness, resiliency, and sufficient flexibility to maintain strength and integrity in wether extremes while in constant contact with aliphatic hydrocarbon fuels, Although, generally, thermoplastic polymers and particular thermoplastic polyurethanes can provide flexibility, they invariably do not exhibit adequate structural strengths and flexibility and lack long term resistance to hydrocarbon liquid fuels as well as necessary hydrolytic stability. The physical properties and specifications of polymers, polymeric composites, and flexible fuel tanks constricted from them are set forth in MIL T52983B (Sept. 17, 1984) and the test for fuel resistance is set forth in ASTM D471-79 and particularly for resistance to fuels B and D. Fuel tanks generally have been suggested based on polyurethane polymers. In U.S. Patent No. 4,487,913, for instance, complex thermosetting polyurethane polymers are crosslinked in the construction of aircraft fuel tanks typically comprising rigid structures. Similarly, U.S. Patent No. 4,565,729 discloses a multilayer rigid laminate for rigid structural fuel tanks used on aircraft based on thermosetting amine crosslinked polyurethane polymers.

Polyurethane coated fabrics used in unrelated flexible fabric constructions are disclosed in U.S. Patent No. 4,689,385 (face masks) and U.S. Patent No. 2,657,151 (raincoats). Unreinforced thermoplastic polyurethane elastomers for general use are disclosed in U.S. Patent No. 4,169,196, U.S. Patent No. 3,528,948 and U.S. Patent No. 3,706,710 based on polyester polyols reacted with diisocyanates and extended with low molecular weight diols. In addition to not being combined with fabrics for either rigid or flexible reinforced products, the polymers disclosed in these patents are merely general purpose polyurethane elastomers which do not necessarily exhibit high resistance to aliphatic hydrocarbon fuels or hydrolytic resistance or other structural and utility characteristics necessary for the construction of flexible fuel tanks. Other polyurethane polymers including polyester based polyurethanes are disclosed in the following patents.

U.S. Patent No. 2,871,218 disclosing extruded plastic sheets resistant to hydrocarbon solvents but soluble in polar solvents; U.S. Patent No. 4,400,498 pertaining to heat and solvent resistant crosslinked polyurethanes particularly adapted to disperse fillers and pigments and useful for adhesives; U.S. Patent No. 4,191,818 directed to heat resistant, crosslinked crystalline polyurethanes used in elastomeric cast moldings; U.S. Patent No. 3,214,411 suggesting polyester polyurethane polymers adapted to be heat crosslinked in high heat injection molding processes; and U.S. Patent No. 3,012,992 disclosing load bearing, crosslinked polyurethane castings and plastics. U.S. Patent No. 4,439,552 discloses cellular polyurethane foams, whereas U.S. Patent No. 4,762,884 discloses radiation activated crosslinked polyurethanes. U.S. Patent No. 3,741,918 discloses thermoplastic polyurethane compositions and their utility as shoe soles and solid industrial tires.

The physical, chemical and structural requirements for flexible fuel tanks include prolonged flexibility and curability, resiliency and toughness, especially prolonged hydrocarbon fuel resistance and hydrolytic stability, high tensile strength before and after immersion in water or fuel, and certain stress-strain requirements such as tensile strength, percent elongation, and modulus. However, various polyurethane polymers ordinarily considered to exhibit excellent physical properties have been found inadequate. Polyurethane polymers based on polycaprolactone polyol, polytetramethylene ether glycol, and poly(tetramethylene adipate) glycol, are unsatisfactory and in particular lack satisfactory resistance to aliphatic hydrocarbon fuels. Polycaprolactone polyurethanes and polyether polytetramethylene ether glycol polyurethane, for example, exhibited adequate hydrolytic stability but lacked sufficient resistance to liquid hydrocarbon fuels.

U.S. Patent No. 5,047,495 to E. G. Kolycheck teaches a high molecular weight thermoplastic polyurethane which is the polymeric reaction product of an ethylene ether oligomer glycol intermediate co-reacted with a non-hindered diisocyanate and an extender glycol. The: ethylene ether oligomer glycol intermediate is (a) a diethylene glycol-aliphatic linear polyester or (b) a polyethylene glycol and has a number average molecular weight from about 500 to about 5,000 Daltons. The resulting polyurethane polymer has a weight average molecular weight from about 60,000 to about 500,000 Daltons, exhibits excellent fuel resistance, and is used in reinforced fabric molded flexible fuel tanks or containers for storage of gasoline or jet fuels.

Beyond gasoline and jet fuel, specially blends of gasolines, such as E85, which is an environmentally friendlier gasoline blend of 85% ethanol and 15% gasoline, have led to a need for better materials for storage of fuels. These materials need to provide excellent resistance toward the fuel, while being able to be shared into containers for the fuels.

### SUMMARY OF THE INVENTION

A high molecular weight, thermoplastic polyurethane (or TPU) composition characteristically resistant to aliphatic hydrocarbon fuels, where the polyurethane composition is adapted for use as an aliphatic hydrocarbon fuel barrier in the construction of flexible fuel containers, and the polyurethane is the reaction product of as poly(diethylene adipate) glycol reacted with a non-hindered diisocyanate and an aliphatic chain extended.
In particular, the present inventions relates to the use as defined in the claims.

### DETAILED DESCRIPTION OF THE INVENTION

The present invention is directed to the use of polyurethane compositions which are synthesized from poly(diethylene glycol) adipate, which is reacted with a non-hindered diisocyanate and an aliphatic chain extender to form the polymer. The polyurethane composition exhibits excellent resistance toward fuels, especially alcohol-containing fuels. The compositions can be plasticized and used in the molding of fabric reinforced, portable flexible fuel containers. The plasticized compositions exhibit better cold temperature snap back characteristics in addition to enhanced fuel resistance.

In the preferred embodiment, the polyurethane is synthesized from poly(diethylene adipate) glycol as the macroglycol, 1,4-butanediol as the chain extender, and methylene diphenyl isocyanate (MDI) as the diisocyanate. The preferred plasticizer to be incorporated into the thermoplastic polyurethane (TPU) is benzyl butyl phthalate. Benzyl butyl phthalate is commercially available as Santicizer 160 from the Ferro Corporation.

TPU polymers may be prepared by reacting la polyisocyanate with an intermediate such as a hydroxyl terminated polyester, a hydroxy terminated polyether, a hydroxy terminated polycarbonate or mixtures thereof (hydroxyl terminated intermediates are commonly referred to as polyols), with one or more glycol chain extenders, all of which are well known to those skilled in the art. U.S. Patent No. 6,777,466 to Eckstein et al. provides detailed disclosure of processes to provide certain TPU polymers that may be utilized in embodiments of the present invention.

The polyester-ether intermediate, a hydroxyl terminated, saturated polyester-ether polymer is synthesized by reacting excess equivalents of diethylene glycol with considerable lesser equivalents of an aliphatic, preferably an alkyl, dicarboxylic acid having four to twelve carbon atoms where the most preferred is adipic acid. Other useful dicarboxylic acids include succinic, glutaric, pimelic, suberic, azelaic and sebacic acids. The most preferred polyester ether intermediate is polydiethylene glycol adipate. In accordance with this aspect of the present invention, excess moles of diethylene glycol are reacted with lesser moles of dicarboxylic acid at levels from 5 mole percent to 50 mole percent excess of glycol to provide a hydroxyl terminated polyester-ether oligomer chain having a number average molecular weight between 500 to 5000 Daltons and preferably between 700 and 2500. The short chain polyester ether oligomer contains repeating diethylene ether structures and comprises on an equivalent basis from 1.05 to 1.5 equivalents of diethylene glycol co-reacted with one equivalent of dicarboxylic acid to produce the low molecular weight polyester-esther oligomer intermediate. The high excess equivalents of diethylene glycol controls the number average molecular weight of the polyester-ether oligomer preferably below 2500 Daltons and further assures 6 hydroxyl terminated linear polyester-ether oligomer. The polyester-ether oligomers synthesized by reacting the diethylene glycol with lesser equivalents of dicarboxylic acid at temperatures of from 150°C to 23°C in the absence or in the presence of an esterification catalyst such as stannous, chloride for time sufficient to reduce the Acid No. to about zero.

The hydroxyl terminated polyester-ether oligomer intermediate is further reacted with non-hindered diisocyanate along with extender glycol in a so-called one-shot or simultaneous co-reaction of oligomer, diisocyanate, and extender glycol to produce the very high molecular weight linear polyurethane having a weight average molecular weight broadly from 60,000 to 500,000 Daltons, preferably from 80,000 to 180,000, and most preferably from 100,000 to 180,000 Daltons. The weight average molecular weight (Mw) is determined by GPG using a polystyrene standard. The very high molecular weight linear polyurethane based on the polyester-ether oligomer in accordance with this aspect of the invention is unique in that an extraordinary high molecular weight polyurethane polymer is produced from a low molecular weight polyester-ether oligomer.

Thermoplastic polyurethanes can be produced by reacting together preferably in a one-shot process the diethylene ether ester oligomer glycol intermediate, an aromatic or aliphatic non-hindered diisocyanate, and an extender glycol. On a mole basis, the amount of extender glycol for each mole of oligomer glycol intermediate is from 0.1 to 3.0 moles, desirably from 0.2 to 2.1 moles, and preferably from 0.5 to 1.5 moles. On a mole basis, the high molecular weight polyurethane polymer comprises from 0.97 to 1.02 moles, and preferably 1.0 moles of non-hindered diisocyanate for every 1.0 total moles of the sum of both the extender glycol and the oligomer glycol (i.e., extender glycol+oligomer glycol=1.0).

Useful non-hindered diisocyanate comprise aromatic non-hindered diisocyanates and include, for example,1,4-diisocyanalobenzene (PPDI), 4,4'-methylenebis (phenyl isocyanate) (MDI), 115-naphthalene diisocyanate (NDI), m-xylene diisocyanate (XDI), as well as. non-hindered, cyclic aliphatic diisocyanates such as 1,4-cyclohexyl diisocyanate (CHDI), and H12 MDI. The most preferred, diisocyanate is MDI. Suitable extender glycols (i.e., chain extenders) are aliphatic short chain glycols having two to six carbon atoms and containing only primary alcohol groups. Preferred glycols include diethylene glycol, 1,3 propane diol, 1,4-butane diol, 1,5-pentane diol, and 1,6-hexane diol with the most preferred glycol being 1,4-butane diol.

In accordance with the present invention, the hydroxyl terminated diethylene ether ester oligomer intermediate, the non-hindered diisocyanate, and the aliphatic extender glycol are co-reacted simultaneously in a one-shot polymerization process at a temperature above 100°C and usually 120°C, whereupon the reaction is exothermic and the reaction temperature is increased to 200°C to 250°C.

The resulting high molecular weight, thermoplastic polyurethane of this invention is particularly useful as a polymeric binder melt applied, such as by melt coating, to reinforcing fabric, such as Nylon, which can be molded under heat and pressure into a flexible fuel tank for storage of gasoline fuels. The flexible fuel tank can also be made by welding sheets of the TPU coated fabric together to create the fuel tank. Welding can be done by heat welding, RF welding or solvent welding.

According to the invention, for forming the shaped objects, i.e. fuel tanks, the polymer composition is plasticized to facilitate the formation of the shaped objects and to provide better temperature snap-back, characteristics. The type of plasticizer used can be any of the known plasticizers for use in TPU. The most common plasticizer types used are phthalates with butyl benzyl phthalate being the most preferred. Plasticizers used in the present invention can include phthalate based plasticizers, such as, di-n-butylphthalate, di-2-ethylhexyl phthalate (DOP), di-n-octyl phthalate, diisodecyl phthalate, diisooctyl phthalate, octyldecyl phthalate, butylbenzyl phthalate, and di-2-ethyhexyl phosphate isophthalate; aliphatic ester-based plasticizers, such as di-2-ethylhexyl adipate (DOA), di-n-decyl adipate), diisodecyl adipate, dibutyl sebacate, and di-2-ethylhexyl sebacate; pyrometallitate-based plasticizers, such as trioctyl trimellitate and tridecyl trimellitate; phosplyate-based plasticizers, such as tributyl phosphate, tri-2-ethylhexyl phosphate, 2-ethylhexyldiphenyl phosphate, and tricresyl phosphate; epoxy-based plasticizers, such as epoxy-based-soybean oil; and. polyester-based polymer plasticizers. For applications that are sensitive from the toxicological point of view, such as children's toys and food contact, di-isononyl-cyclohexane-1,2-diicarboxylate (Hexamoil^{®} DINCH from BASF) may be used as the plasticizer. A single plasticizer may be used or a combination of two or more plasticizers may be used. The selection of the desired plasticizer will depend on the end use application of the TPU polymer as is well understood by those skilled in the art of formulating TPU. The amount of. plasticizer used is from 5.0 to 30.0 percent by weight of the polyurethane composition. Preferably, the level of plasticizer is from 5.0 to 20.0 percent by weight of the polyurethane composition.

For some applications, auxiliary additives may be used in the TPU compositions of this invention. Additives such as colorants, antioxidants, antiozonates, light stabilizers, and the like may be used in the TPU composition. Preferably, auxiliary additives are present in small amounts, such as from 0 to 5, and more preferably from 0.1 to 1 weight percent of the TPU composition. Inert fillers, such as talc, clay, calcium carbonate and the like, may be used in amounts of from 0 to 50 weight percent of the TPU composition. Preferably, inert fillers are not present in the TPU composition. If flame and smoke retardants are used, they are typically present in amounts of from 5-50 weight percent of the TPU composition.

The merits of the present invention will be better understood by referring to the following illustrative examples.

### EXAMPLES:

Samples of polyurethane polymers in accordance with the present invention were prepared and subjected to fuel immersion testing in E85 fuel blend with the results indicated hereinafter in Table 1. To provide contrast to the polymers of the present invention, commercial polyurethane compositions were also prepared and those results are presented in Table 1, as well.

### Example 1 (Comparative)

A preheated (70°C), agitated holding tank was charged with 100 parts by weight of poly(diethylene ether adipate) glycol (PDEEAG; Lexorez 1100-110 from Inolex) having number average molecular weight of 1000 Daltons and 0.5 parts by weight each of Stabilizer 7000F (Raschig) and Irganox 1010 (Ciba). A second preheated (50°C), agitated holding tank was charged with 1,4-butanediol (BDO; Lyondell). A third preheated (55°C), agitated holding tank was charged with 4,4'-methylenebis(phenylisocyanate) (MDI; Bayer).

A polyurethane composition was formed on a continuous basis by metering the PDEEAG solution (47.88 parts by weight), BDO (10.66 parts by weight), and MDI (41.46 parts by weight) into a static mixer with rapid mixing to form 100 parts by weight of polyurethane polymer. The polymer melt was added to a twin-screw extruder (Werner & Pfleiderer) which was heated to 180-200°C where the conversion continued, 0.3 parts by weight per 100 parts by weight of polyurethane polymer of ethylene bis(stearamide) (Acrawax C, Lonza) was added into an entry port along the extruder. The polymer mixture was conveyed to an underwater pelletizer. The pellets were collected into a heated (105°C) silo and dried for about 3 hours.

### Example 2

A preheated (70°C), agitated holding tank was charged with 100 parts by weight of PDEEAG having number average molecular weight of 1000 Daltons, 23.54 parts by weight of benzyl butyl phthalate (Santicizer 160 from Ferro Corp.) and 0.6 parts by weight each of Stabilizer 7000F and Irganox 1010. A second preheated (50°C), agitated holding tank was charged with BDO. A third preheated (55°C), agitated holding tank was charged with.MDI.

A polyurethane composition was formed on a continuous basis by metering the PDEEAG solution (53.14 parts by weight), BDO (9.59 parts by weight), and MDI (37.28 parts by weight) intro a static mixer with rapid mixing to form 100 parts by weight of polyurethane polymer. The polymer melt was added to a twin-screw extruder which was heated to 180-200°C where the conversion continued, 0.3 parts by weight per 100 parts by weight of polyurethane polymer of ethylene bis(stearamide) was added into an entry port along the extruder. The polymer mixture was conveyed to an underwater pelletizer. The pellets were collected into a heated (105°C) silo and dried for about 3 hours.

### Example 3

A preheated (70°C), agitated holding tank was charged with 100 parts by weight of PDEEAG having number average molecular weight of 1000 Daltons, 53.03 parts by weight of benzyl butyl phthalate, and 0.66 parts by weight each of Stabilizer 7000F and Irganox 1010. A second preheated (50°C), agitated holding tank was charged with BDO. A third preheated (55°C), agitated holding tank was charged with MDI.

A polyurethane composition was formed on a continuous basis by metering the PDEEAG solution (58.39 parts by weight), BDO (8,51 parts by weight), and MDI (33.10 parts by weight) into a static mixer with rapid mixing to form 100 parts by weight of polyurethane polymer. The polymer melt was added to: a twin-screw extruder which was heated to 180-200°C where the conversion continued, 0.3 parts by weight per 100 parts by weight of polyurethane polymer of ethylene bis(stearamide) was added into a port along the extruder. The polymers mixture was conveyed to an underwater pelletizer. The pellets were collected into a heated (105°C) silo and dried for about 3 hours. Example 4 (Comparative)

A preheated (70°C), agitated holding tank was charged with 100 parts by weight of PDEEAG having number average molecular weight of 1000 Daltons arid 0.72 parts by weight each of Stabilizer 7000F and Irganox 1010. A second preheated (50°C), agitated holding tank was charged with BDO. A third preheated (55°C), agitated holding tank was charged with MIDI.

A polyurethane composition was formed on a continuous basis by metering the PDEEAG solution (35.49 parts by weight), BDO (14,76 parts by weight), and MDI (49.75 parts by weight) into a static mixer with rapid mixing to form 100 parts by weight) of polyurethane polymer. The polymer melt was added to a twin-screw extruder which was heated to 180-200°C where the conversion continued, 0.3 parts by weight per 100 parts by weight of polyurethane polymer of ethylene bis(stearamide) was added into a port along the extruder. The polymer mixture was conveyed to an underwater pelletizer. The pellets were collected into a heated (105°C) silo and dried for about 3 hours.

### Example 5

A preheated (70°C), agitated holding tank was charged with 100 parts by weight of PDEEAG having number average molecular weight of 1000 Daltons, 31.88 parts by weight of benzyl butyl phthalate, and 0.8 parts by weight each of Stabilizer 7000F and Irganox 1010. A second preheated (50°C), agitated holding tank was charged with BDO. A third preheated (55°C), agitated holding tank was charged with MDI.

A polyurethane compositions was formed on a continuous basis by metering the PDEEAG solution (41.99 parts by weight), BDO (13,27 parts by weight), and MDI (44.73 parts by weight) into a static mixer with rapid mixing to form 100 parts by weight of polyurethane polymer. The polymer melt was added to a twin-screw extruder which was heated to 180-200°C where the conversion continued, 0.3 parts by weight per 100 parts by weight of polyurethane polymer of ethylene bis(stearamide) was added into a port along the extruder. The polymer mixture was conveyed to an underwater pelletizer. The pellets were collected into a heated (105°C) silo and dried for about 3 hours.

### Example 6

A preheated (70°C), agitated holding tank was charged with 100 parts by weight of PDEEAG having number average molecular weight of 1000 Daltons, 71.81 parts by weight of benzyl butyl phthalate, and 0.9 parts by weight each of Stabilizer 7000F and Irganox 1010. A second preheated (50°C), agitated holding tank was charged with BDO. A third preheated (55°C), agitated holding tank was charged with MDI.

A polyurethane composition was formed on a continuous basis by metering the PDEEAG solution (48.50 parts by weight), BDO (11.78 parts by weight), and MDI (39.72 parts by weight) into a static mixer with rapid mixing to form 100 parts by weight of polyurethane polymer. The polymer melt was added to a twin-screw extruder which was heated to 180-200°C where the conversion continued, 0.3 parts by weight per 100 parts by weight of polyurethane polymer of ethylene bis(stearamide) was added into a port along the extruder. The polymer mixture was conveyed to an underwater pelletizer. The pellets were collected into a heated (105°C) silo and dried for about 3 hours.

### Control 1

This is a commercial polyurethane composition produced from poly(tetramethylene ether) glycol, BDO, and MDI in a process similar to that described in the examples.

### Control 2

This is a commercial polyurethane composition produced from poly(tetramethylene adipate) glycol, BDO, and MDI in a process similar to that described in the examples.

The polyurethane compositions described in Examples 1-6 and Controls 1 and 2 were extruded into 0.254 mm (10-mil) and 0.762 mm (30-mil) thick films on a 25.4 mm (1-inch) diameter single screw extruder (Killion). These films were used for property testing. Table 1 summarizes property data. These results show that the polyurethanes using PDEEAG have superior resistance to E85 fuel compared to the control polyurethanes. It can also be seen that incorporation of the benzyl butyl phthalate plasticizer further reduces volume swell while improving low temperature flexibility.

**Table 1 - E85 Resistance Data (23°C Exposure)**

| Example: | 1 **) | 2 | 3 | 4 **) | 5 | 6 | Control 1 | Control 2 |
|---|---|---|---|---|---|---|---|---|
| Shore Hardness | 95A | - | - | 62D | - | - | 92A | 92A |
| Santicizer 160, % | 0 | 10 | 20 | 0 | 10 | 20 | 0 | 0 |

| Originals | | | | | | | | |
|---|---|---|---|---|---|---|---|---|
| Stress @ 100% Strain, psi | 2490 | 1660 | 1200 | 4275 | 3240 | 2320 | - | - |
| Stress @ 300% Strain, psi | - 4870 | 3340 | 2380 | 4635 | 5900 | 4820 | - | - |
| Stress @ Break, psi*) | 7410 | 8090 | 7640 | 4960 | 7400 | 7330 | 8900 | - |
| Strain @ Break, % | 415 | 475 | 525 | 360 | 360 | 420 | 465 | - |

| Immersion (6 days) | | | | | | | | |
|---|---|---|---|---|---|---|---|---|
| Stress @ 100% Strain, psi | 815 | 825 | 775 | 1300 | 1120 | 1160 | - | - |
| Stress @ 300% Strain, psi | 1570 | 1600 | 1450 | 3490 | 2800 | 2840 | - | - |
| Stress @ Break, psi*) | 4580 | 5030 | 4980 | 6830 | 5720 | 5860 | 4800 | - |
| Strain @ Break, % | 555 | 560 | 590 | 435 | 420 | 430 | 635 | - |
| Volume change, % | 18.1 | 4.8 | -6.4 | 11.8 | 9.4 | -3.5 | 26 | - |
| Weight change, % | 11.4 | 0.9 | -9.4 | 8,3 | 4.6 | -7.2 | - | |
| E85 Permeability, g/m²*24h; 50% RH, 23°C | 40 | 50 | - | 5 | 15 | - | 140 | 1200 |
| Tg, °C (DSC) | -13 | -23 | -36 | 15 | -23 | -33 | -22 | -43 |

| Test Methods | | | | | | | | |
|---|---|---|---|---|---|---|---|---|
| Shore Hardness - ASTM D2240 | | | | | | | | |
| Stress/Strain - ASTM D412 | | | | | | | | |
| Volume and Weight Change after Immersion - ASTM D471 | | | | | | | | |
| Permeability - ASTM D814 | | | | | | | | |

| | | | | | | | | |
|---|---|---|---|---|---|---|---|---|
| *) 1 psi = 6.89 kPa **) Comparative | | | | | | | | |

## Claims

1. Use of a high molecular weight, thermoplastic polyurethane composition comprising
(i) a polyurethane comprising the reaction product of a poly(diethylene adipate) glycol reacted with a non-hindered diisocyanate and an aliphatic chain extender, and
(ii) from 5 to 30 percent by weight of plasticizer, based upon the weight of the polyurethane composition,
as an aliphatic hydrocarbon fuel barrier in the construction of flexible containers for alcohol-containing fuels.

2. The use of the thermoplastic polyurethane composition according to claim 1, wherein the diisocyanate is 4,4'-methylene bis(phenyl isocyanate).

3. The use of the thermoplastic polyurethane composition according to claim 1, wherein the chain extender is 1,4-butanediol.

4. The use of the thermoplastic polyurethane composition according to claim 3, wherein said diisocyanate is simultaneously reacted with said extender glycol and said poly(diethylene adipate) glycol.

5. The use of the thermoplastic polyurethane composition according to claim 4, wherein the amount of said extender glycol to said poly(diethylene adipate) glycol is from 0.1 to 3.0 moles.

6. The use of the thermoplastic polyurethane composition according to claim 3, wherein the amount of said diisocyanate is from 0.97 to 1.02 moles for every total one mole of said poly(diethylene adipate) glycol and said extender glycol, and wherein the weight average molecular weight of said thermoplastic polyurethane is from 80,000 to 180,000 Daltons.

7. The use of the thermoplastic polyurethane composition according to claim 1, wherein the plasticizer is benzyl butyl phthalate.

8. The use of the thermoplastic polyurethane composition according to claim 1, wherein the plasticizer is present in an amount of 5.0 to 20.0 % by weight, based upon the weight of the polyurethane composition.

9. The use of the thermoplastic polyurethane composition according to claim 1, in the molding of fabric reinforced, portable flexible fuel containers.

## Patentansprüche

1. Verwendung einer hochmolekularen thermoplastischen Polyurethanzusammensetzung, die
(i) ein Polyurethan, das das Reaktionsprodukt eines Poly(diethylen-adipat)glycols, welches mit einem nichtgehinderten Diisocyanat und einem aliphatischen Kettenverlängerer umgesetzt wurde, umfasst, und
(ii) 5 bis 30 Gew.-% Weichmacher, bezogen auf das Gewicht der Polyurethanzusammensetzung,
umfasst, als Sperre für aliphatische Kohlenwasserstoff-Kraftstoffe bei der Konstruktion von flexiblen Behältern für alkoholhaltige Kraftstoffe.

2. Verwendung der thermoplastischen Polyurethanzusammensetzung gemäß Anspruch 1, wobei es sich bei dem Diisocyanat um 4,4'-Methylenbis-(phenylisocyanat) handelt.

3. Verwendung der thermoplastischen Polyurethanzusammensetzung gemäß Anspruch 1, wobei es sich bei dem Kettenverlängerer um 1,4-Butandiol handelt.

4. Verwendung der thermoplastischen Polyurethanzusammensetzung gemäß Anspruch 3, wobei das Diisocyanat gleichzeitig mit dem Verlängererglycol und dem Poly(diethylenadipat)glycol umgesetzt wird.

5. Verwendung der thermoplastischen Polyurethanzusammensetzung gemäß Anspruch 4, wobei die Menge des Verlängererglycols zu dem Poly(diethylenadipat)glycol 0,1 bis 3,0 mol beträgt.

6. Verwendung der thermoplastischen Polyurethanzusammensetzung gemäß Anspruch 3, wobei die Menge des Diisocyanats 0,97 bis 1,02 mol pro Mol der Gesamtstoffmenge des Poly(diethylenadipat)glycols und des Verlängererglycols beträgt und wobei das Gewichtsmittel des Molekulargewichts des thermoplastischen Polyurethans 80 000 bis 180 000 Dalton beträgt.

7. Verwendung der thermoplastischen Polyurethanzusammensetzung gemäß Anspruch 1, wobei es sich bei dem Weichmacher um Benzylbutylphthalat handelt.

8. Verwendung der thermoplastischen Polyurethanzusammensetzung gemäß Anspruch 1, wobei der Weichmacher in einer Menge von 5,0 bis 20,0 Gew.-% vorhanden ist, bezogen auf das Gewicht der Polyurethanzusammensetzung.

9. Verwendung der thermoplastischen Polyurethanzusammensetzung gemäß Anspruch 1 beim Formen von textilverstärkten tragbaren flexiblen Kraftstoffbehältern.

## Revendications

1. Utilisation d'un composition de polyuréthane thermoplastique de haut poids moléculaire comprenant
(i) un polyuréthane comprenant le produit réactionnel d'un poly(diéthylène-adipate) glycol réagissant avec un diisocyanate non empêché et un extenseur de chaîne aliphatique, et
(ii) de 5 à 30 % en poids d'un plastifiant, sur la base du poids de la composition de polyuréthane,
comme barrière à un carburant hydrocarbure aliphatique dans la construction de conteneurs flexibles pour des carburants contenant de l'alcool.

2. Utilisation de la composition de polyuréthane thermoplastique selon la revendication 1, dans laquelle le diisocyanate est le 4,4'-méthylène bis(phényl-isocyanate).

3. Utilisation de la composition de polyuréthane thermoplastique selon la revendication 1, dans laquelle l'extenseur de chaîne est le 1,4-butanediol.

4. Utilisation de la composition de polyuréthane thermoplastique selon la revendication 3, dans laquelle on fait réagir simultanément ledit diisocyanate avec ledit glycol extenseur et ledit poly(diéthylène adipate) glycol.

5. Utilisation de la composition de polyuréthane thermoplastique selon la revendication 4, dans laquelle la quantité dudit glycol extenseur audit poly(diéthylène adipate) glycol est de 0,1 à 3,0 moles.

6. Utilisation de la composition de polyuréthane thermoplastique selon la revendication 3, dans laquelle la quantité dudit diisocyanate est de 0,97 à 1,02 moles pour chaque mole totale dudit poly(diéthylène adipate) glycol et dudit glycol extenseur et dans laquelle le poids moléculaire moyen en poids dudit polyuréthane thermoplastique est de 80 000 à 180 000 daltons.

7. Utilisation de la composition de polyuréthane thermoplastique selon la revendication 1, dans laquelle le plastifiant est le benzyl-butyl-phtalate.

8. Utilisation de la composition de polyuréthane thermoplastique selon la revendication 1, dans laquelle le plastifiant est présent en une quantité de 5,0 à 20,0 % en poids, sur la base du poids de la composition de polyuréthane.

9. Utilisation de la composition de polyuréthane thermoplastique selon la revendication 1, dans le moulage de conteneurs de carburant flexibles portables renforcés par une toile.
